# EUROPÄISCHE PATENTSCHRIFT

(11) **EP 1 913 565 B1**
(45) Veröffentlichungstag und Bekanntmachung des Hinweises auf die Patenterteilung: **23.01.2013**
(21) Anmeldenummer: 06754468.4
(22) Anmeldetag: 21.06.2006
(51) Int. Cl.: G08B 17/10

(54) **SENSORVORRICHTUNG**
SENSOR DEVICE
DISPOSITIF DE DETECTION

(30) Priorität: 29.07.2005 DE 102005036417; 22.09.2005 DE 102005045484
(43) Veröffentlichungstag der Anmeldung: 23.04.2008
(73) Patentinhaber: Cedes AG, 7302 Landquart (CH)
(72) Erfinder: ALBERS, Bas, CH-7000 Chur (CH); DE COI, Beat, CH-7320 Sargans (CH); NEBIKER, Peter, CH-7208 Malans (CH)
(74) Vertreter: Dobler, Markus
(86) Internationale Anmeldenummer: PCT/EP2006/005921
(87) Internationale Veröffentlichungsnummer: WO 2007/014598

(56) Entgegenhaltungen:
- DE-A1- 19 507 407
- US-A1- 2002 118 352
- US-B1- 6 724 467
- PATENT ABSTRACTS OF JAPAN Bd. 2003, Nr. 12, 5. Dezember 2003 (2003-12-05) & JP 2004 323140 A (TOSHIBA ELEVATOR CO LTD), 18. November 2004 (2004-11-18)

## Beschreibung

Die Erfindung betrifft eine Sensorvorrichtung bestehend aus einer Quelle für elektromagnetische Strahlung, insbesondere Licht, mehreren separat auswertbaren Empfängern für die elektromagnetische Strahlung und einer Elektronikeinheit.

### Stand der Technik

Mittlerweile gibt es eine riesige Zahl von technischen Vorrichtungen, bei welchen Sensoren die unterschiedlichsten Vorgänge überwachen. Dabei können schwebteilartige Objekte, z.B. Staub, Wassertropfen, Rauch, im Folgenden auch mit Aerosolen bezeichnet oder auch Schnee sowie Gasblasen im Detektionsbereich der Sensoren die Überwachungsvorgänge stören.

Z.B. werden bei einem Lift, beispielsweise einem Personenlift in einem Gebäude, regelmäßig die automatischen Lifttüren dahingehen überwacht, ob sich ein Objekt in deren Bewegungsbahn befindet. Ist dies der Fall, wird die Türe nicht geschlossen, damit keine Kollision, z.B. mit einer Person auftreten kann. Unter normalen Bedingungen ist dies sicherlich ein richtiger Ansatz. Im Fall von einem Brand können aber gravierende Probleme auftreten, da nicht zwischen Rauch und einem Objekt unterschieden wird. Folgendes Szenario kann sich einstellen:

Ein Lift kommt in einem Stockwerk zum Stehen, wo es brennt. Die Tür öffnet sich und Rauch tritt in die Liftkabine ein. Personen im Lift möchten so schnell wie möglich die Etage wieder verlassen. Dies ist aber nicht möglich, da der Türsensor den Rauch als Objekt identifiziert und deshalb eine Steuerung nicht erlaubt, dass die Lifttüren schließen. In einer solchen Situation sind bereits Menschen ums Leben gekommen.

Die US 2002/0118352 A1 offenbart eine dreidimensionale Laser-Radar-Vorrichtung mit einem schnellschaltenden Empfänger für reflektierte Strahlung. Hierin wird auf der Basis einer fest vorgegebenen Laufzeit geprüft, ob sich in dem hierzu entsprechenden Abstand vom Empfänger Reflexionsobjekte befinden oder nicht.

Die DE-T2-691 18 277 offenbart ein Verfahren zur Feuerdetektion, bei welchem ein Strahl elektromagnetischer Strahlung in einen zu überwachenden Raum emittiert, die aus besagtem Raum zurückgekehrte Strahlung gemessen und ein Feuersignal in Reaktion auf eine vorbestimmte Änderung ,der gemessenen zurückgekehrten Strahlung erzeugt wird, wobei die Laufzeit (L) der zurückgekehrten Strahlung zwischen Emission der besagten Strahlung und Empfang der besagten zurückgekehrten Strahlung gemessen und mit einer vorgängig gespeicherten Referenzlaufzeit (L₀) verglichen wird, und ein Feuersignal erzeugt wird, wenn die gemessene Laufzeit (L) in einer vorbestimmten Weise von der besagten gespeicherten Laufzeit (L₀) abweicht.

### Aufgabe und Vorteile der Erfindung

Der Erfindung liegt die Aufgabe zugrunde, eine Sensorvorrichtung der einleitend bezeichneten Art dahingehend weiterzubilden, dass die Sensorvorrichtung störunanfälliger im Hinblick auf schwebteilartige Reflexionsobjekte im sensorüberwachten Bereich wird, wobei zwischen Objekt und Rauch unterschieden werden soll.

Diese Aufgabe wird durch die Merkmale des Anspruchs 1 gelöst.

In den Unteransprüchen sind vorteilhafte und zweckmäßige Weiterbildung der Erfindung angegeben.

Die Erfindung Getrifft eine Sensorvorrichtung, die eine Quelle für elektromagnetische Strahlung, insbesondere Licht, vorzugsweise infrarotes Licht, einen Kamera chip mit mehrere separat auswertbaren Empfängern für die elektromagnetische Strahlung und eine Elektronikeinheit umfasst, die dazu ausgelegt ist, mittels der Quelle elektromagnetische Strahlung auszusenden und eine Distanz, die die von der Quelle ausgesandte elektromagnetische Strahlung von einer Reflexionsfläche eines Objekts an den jeweiligen Empfänger zurücklegt, durch eine Auswertung einer Laufzeit der elektromagnetischen Strahlung oder einer Phase einer auf die elektromagnetische Strahlung aufmodulierten Schwingung zu ermitteln. Weitere Merkmale der.

Erfindung sind, dass die Elektronikeinheit für die Detektion von in einem Medium räumlich verteilt vorhandenen schwebteilartigen Reflexionsobjekten in der Lage ist, aus den von verschiedenen Empfängern in unterschiedlichen Richtungen gemessenen Distanzen, eine erste Gruppe von Distanzen, die in eine vorgegebene Verteilung passen, insbesondere in etwa gleich große Distanzen zu bestimmen und im Fall von mehreren Gruppenmitgliedern ein Signal auszugeben, das der Detektion von schwebteilartigen Reflexionsobjekten zugeordnet ist.

Durch diese Vorgehensweise kann ein Sensor, der auf die beschriebene Art Distanzen misst, zur Detektion von in einem Medium sich befindenden Teilchen eingesetzt werden. Somit wird eine kostengünstige Lösung geboten, um diese Sensoren als z.B. Rauch oder Nebelmelder zu verwenden. Auch könnte ein solcher Sensor die Zahl von Luftblasen in einer Flüssigkeit überwachen.

Der Erfindung liegt dabei die Erkenntnis zugrunde, dass räumlich, insbesondere fein verteilt vorhandene vergleichsweise kleine schwebteilartige Reflexionsobjekte, wie beispielsweise Aerosole, Schnee oder Luftblasen die ausgesandte elektromagnetische Strahlung, insbesondere Licht so reflektieren, dass je nach Art und Dichte der Verteilung der schwebteilartigen Reflexionsobjekte eine typische Distanz gemessen wird.

Bei einer Gleichverteilung ergibt sich eine einzige gleiche Distanz. Da im voraus aber nie genau bekannt ist, wie eine Verteilung aussehen wird, findet vorzugsweise eine Auswertung durch Kategorisieren der Distanzen statt. Beispielsweise kann eine um so sichere Aussage über das Vorhandensein von schwebteilartigen Reflexionsobjekten gemacht werden, je ähnlicher die Distanzen sind.

### Eine Kategoriebildung kann in einer vorteilhaften

Ausgestaltung der Erfindung so aussehen, dass die erste Gruppe Distanzen enthält, die weniger als 30 % unterschiedlich sind. Es ist jedoch auch denkbar, die Schwelle herabzusetzen auf 15 % oder 5 %. Mit kleiner werdendem Toleranzbereich lässt sich die Sicherheit für die Detektion von schwebteilartigen Reflexionsobjekten steigern.

Wegen der endlichen Genauigkeit bei Messungen kann es vorkommen, dass bei einer ebenen sich im Erfassungsbereich sich befindenden Fläche vom Sensor Distanzen gemessen werden, die in etwa gleich groß sind. Damit nicht fälschlich auf schwebteilartige Reflexionsobjekte geschlossen wird, ist es vorteilhaft, für eine Gruppenbildung nur Distanzen miteinander zu vergleichen, die von Empfängern mit einer vorbestimmten geometrischen Anordnung zueinander stammen. Werden Distanzen in unterschiedlichen Richtungen gemessen, so ist die jeweilige Distanz zu einer ebenen Fläche nicht konstant. Nur eine kugelförmige Fläche mit entsprechender Positionierung zur Quelle würde zu gleichen gemessenen Distanzen führen. Da es aber sehr unwahrscheinlich ist, dass die Szenerie, die der Sensor erfasst, diese Form hat, braucht dieser Sonderfall nicht berücksichtigt zu werden.

Es ist weiterhin denkbar, dass im Überwachungsbereich der Sensorvorrichtung sich Objekte befinden, deren Distanzen zu den Empfängern gleich sind. Da allerdings eine Wolke oder ein Feld von sich in einem Medium befindenden schwebteilartigen Reflexionsobjekten immer einen gewissen Ausbreitungsbereich einnehmen, kann dann auf schwebteilartige Reflexionsobjekte geschlossen werden, wenn jeweils mehrere benachbarte Distanzen in etwa gleich sind.

Um die Gefahr einer fehlerhaften Detektion weiter zu vermindern, sollte die Anzahl der Gruppenmitglieder der ersten Gruppe zumindest größer als 5, vorzugsweise größer als 10, gegebenenfalls jedoch sogar größer als 20 sein.

Objekte, die sich nah an dem Sensor befinden, können genügend Licht reflektieren, um eine effektive Distanz zu messen, obwohl z.B. Rauch vorhanden ist. Dies würde bedeuten, dass so ein Objekt die Detektion von Rauch verhindern könnte. Es ist deshalb vorteilhaft, wenn die Elektronikeinheit ausgebildet ist, auch Distanzen, die kleiner sind als der Mittelwert von in etwa gleich großen Distanzen als Mitglieder der ersten Gruppe zu behandeln. Eine solche Vorgehensweise sollte besonders dann angewandt werden, wenn die Empfänger der in etwa gleichen Distanzen geometrisch an den einen oder die mehreren Empfänger angrenzen, die die kleine oder die kleinen Distanzen messen.

Im Weiteren ist es vorteilhaft, die Fähigkeiten des Sensors zusätzlich neben der Detektion von schwebteilartigen Reflexionsobjekten für andere Detektionsaufgaben zu verwenden. Vorzugsweise wird die Elektronikeinheit so ausgelegt, in Abhängigkeit der gemessenen Distanzen, die Anwesenheit und/oder Bewegung von Objekten zu detektieren, die deutlich größer sind, als die schwebteilartigen Reflexionsobjekte.

Ist die Elektronikeinheit im Weiteren dazu ausgelegt, beispielsweise die Intensität von empfangenen Licht für insbesondere die verschiedenen Empfänger zu ermitteln, kann auf dieser Grundlage die Anwesenheit und/oder die Bewegung eines Objekts detektiert werden. Dazu lassen sich z.B. Graustufenbilder auswerten.

In einer weiteren möglichen Ausgestaltung ist die Elektronikeinheit ausgelegt, ein angetriebenes Bewegungselement, z.B. eine Türe, zu steuern.

In einem Ausnahmefall muss damit gerechnet werden, dass der Sensor beschädigt oder zumindest stark beeinträchtigt wird, sobald schwebteilartige Reflexionsobjekte detektiert werden.

Dies kann beispielsweise bei einem Brand durch Rauch oder Feuer verursacht werden. Dadurch können Distanzen gegebenenfalls nicht mehr richtig erfasst werden, wodurch die Sensorvorrichtung fälschlicherweise das nicht Vorhandensein von schwebteilartigen Reflexiohsobjekten signalisiert. In einer bevorzugten Ausgestaltung ist es deshalb von Vorteil, wenn die Elektronikeinheit so ausgelegt ist, dass wenn schwebteilartige Reflexionsobjekte detektiert wurden, die Elektronikeinheit das entsprechende Signal laufende ausgibt, selbst wenn die Grundlage für dieses Signal entfällt, weil keine schwebteilartigen Reflexionsobjekte mehr detektiert werden.

In einer besonderes bevorzugten Ausführungsform ist der Kamerachip z.B. ein CMOS- oder CCD-Chip. Dies ermöglicht es, kostengünstig viele Empfänger auf einem kleinen Raum unterzubringen.

Ein Feld von verteilten schwebteilartigen kleinen Reflexionsobjekten kann Regionen mit unterschiedlichen Dichten aufweisen. D.h., dass nicht in jeder Richtung die gleiche Distanz gemessen wird, auch wenn die Sensorvorrichtung komplett vom Feld aus schwebteilartigen Reflexionsobjekten umgeben ist. Um Fehlinterpretationen aufgrund dessen zu vermeiden, wird im Weiteren vorgeschlagen, dass wenn die Elektronikeinheit aus den Distanzen neben der ersten Gruppe eine zweite Gruppe von vorgegebenen, z.B. in etwa gleich großen, aber zur ersten Gruppe verschiedenen Distanzen ermittelt, die Distanzen der zweiten Gruppe entsprechend der ersten Gruppe behandelt werden, so wie wenn eine Gruppe vorliegt.

Damit die Distanzmessungen genügend genau sind, können die Distanzen aus mehreren Distanzmessungen ermittelt werden. Pro Empfänger können z.B. mehrere Distanzmessungen sequenziell nacheinander durchgeführt werden, um daraus eine Distanz zu berechnen. Dazu stehen alle Methoden aus der Statistik zur Verfügung.

### Zeichnungen:

Ausführungsbeispiele der Erfindung sind in den Zeichnungen dargestellt. Es zeigen:
- Figur 1: in schematischer dreidimensionaler Darstellung eine optische Sensoranordnung an einer zweiflügligen Schiebetür mit angedeuteter Rauchwolke,
- Figur 2 und 3: Schaubilder, bei welchen für Pixel einer aus vielen Pixeln bestehenden Empfängereinheit, auf welche ein Linienbereich abgebildet wird, die jeweils dazugehörige Distanz aufgetragen ist.

### Beschreibung der Ausführungsbeispiele

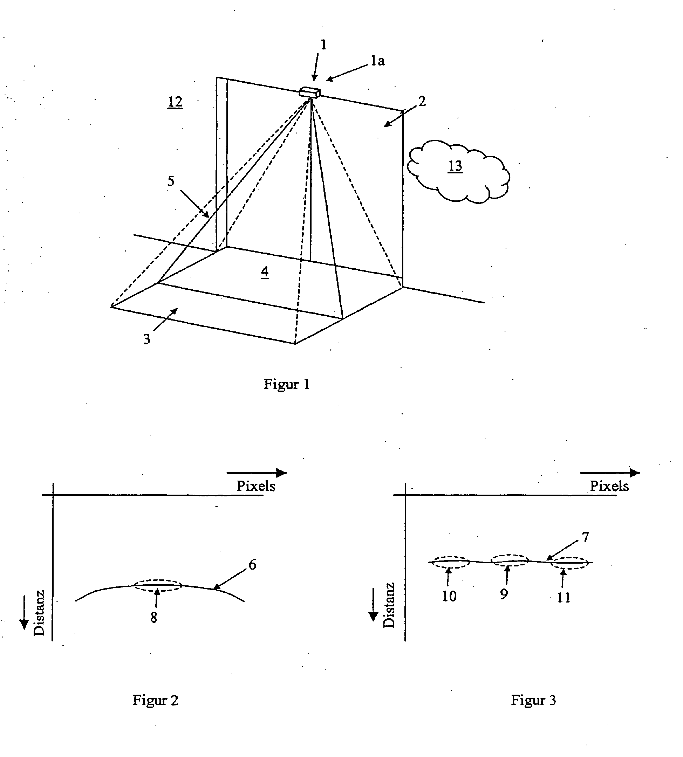

Die Figur 1 zeigt in einer schematischen dreidimensionalen Ansicht eine optische Türsensoranordnung 1 an einer zweiflügligen Schiebetür 2 mit einem optischen Sensor 1a über den beiden Türflügeln. Der Erfassungsbereich 4 des Sensors 1a ist schematisch durch gestrichelte Linien dargestellt, die vom Sensor 1a ausgehen und an einer Bodenfläche 3 enden. Dementsprechend wird ein Raum, inklusive der Luft 12 vor der Schiebetüre 2 erfasst. Die Bodenfläche 3 umfasst den Vorraum der Schiebetür 2. Zur Vereinfachung wird im Folgenden nur eine Fläche 5 des Überwachungsbereichs 4 betrachtet. Der Sensor 1a besitzt einen Kamerachip der Distanzbilder vom Erfassungsbereich 4 aufnimmt.

In den Figuren 2 und 3 werden die in der Fläche 5 gemessenen Distanzen gezeigt. Die x-Achse entspricht Pixel des Sensors 1a, auf welche der Überwachungsbereich abgebildet wird. Auf der y-Achse sind die dazugehörigen gemessenen Distanzen aufgetragen. Die Kurve 6 stellt die gemessenen Distanzen dar.

Figur 2 zeigt die gemessenen Distanzen in der Situation so wie in Figur 1 dargestellt. Obwohl der Boden im Überwachungsbereich 4 eben ist, bilden die gemessenen Distanzen die gekrümmte Kurve 6. Dies ist so, weil der Weg vom Sensor 1a zum Boden 3 von der Mitte ausgehend zum Rand des Überwachungsbereichs 4 zunimmt.

Wird der Sensor komplett von einem im Wesentlichen homogenen Aerosolfeld umgeben, so wird der Sensor 1a in alle Richtungen in etwa die gleiche Distanz messen. Dies ist beispielsweise dann der Fall, wenn sich eine Rauchwolke 13 (in Figur 1 angedeutet) vor den Sensor 1a geschoben hat.

Die entsprechende Distanzmessung ist in Figur 3 dargestellt. Die Distanzen der Bereiche 9, 10 und 11 sind annähernd gleich. Da die Bereiche 9, 10 und 11 zudem vergleichsweise weit auseinanderliegen, kann zuverlässig auf die Detektion von Rauch geschlossen werden. Die Distanzen in den Bereichen 9, 10 und 11 in Figur 3 unterscheiden sich hier im Beispielfall um weniger als 5 % von der größten zur kleinsten gemessenen Distanz. Zudem sind auch die Distanzen der einzelnen Bereiche 9, 10 und 11 zueinander in einer entsprechenden Schwankungsbreite, wodurch mit vergleichsweise hoher Sicherheit auf die Detektion von schwebteilartigen Reflexionsobjekten, wie im vorliegenden Ausführungsbeispiel auf Rauch geschlossen werden kann.

In Figur 2 könnten die Distanzen innerhalb des Bereiches 8 ebenfalls als Rauch interpretiert werden, weil diese ebenfalls innerhalb einer engen Schwankungsbreite liegen. Da jedoch die dazugehörigen Pixel vergleichsweise nahe zusammenliegen, stellt dies ein Ausschlusskriterium für die Detektion von schwebteilartigen Reflexionsobjekten, wie z.B. Rauch dar.

## Patentansprüche

1. Sensorvorrichtung (1) bestehend aus einer Quelle für elektromagnetische Strahlung, insbesondere Licht, einem Kamerachip mit mehreren separat auswertbaren Empfängern für die elektromagnetische Strahlung und einer Elektronikeinheit, wobei die Elektronikeinheit dazu ausgelegt ist, mittels der Quelle elektromagnetische Strahlung auszusenden und eine Distanz, die die von der Quelle ausgesandte elektromagnetische Strahlung von einer Reflexionsfläche eines Objekts an den jeweiligen Empfänger zurücklegt, durch eine Auswertung einer Laufzeit der elektromagnetischen Strahlung und/oder einer Phase einer auf die elektromagnetische Strahlung aufmodulierten Schwingung zu ermitteln, wobei die Elektronikeinheit für die Detektion von in einem Medium räumlich verteilt vorhandenen schwebteilrartigen Reflexionsobjekten in der Lage ist, aus den von verschiedenen Empfängern in unterschiedliechen Richtungen gemessenen Distanzen eine erste Gruppe (9, 10, 11) von Distanzen, die in eine vorgegebene Verteilung passen, insbesondere in etwa gleich große Distanzen zu bestimmen und im Fall von mehreren Gruppenmitgliedern ein Signal auszugeben, das der Detektion von schwebteilartigen Reflexionsobjekten zugeordnet ist.

2. Vorrichtung (1) nach Anspruch 1, **dadurch gekennzeichnet, dass**, die erste Gruppe (9, 10, 11) Distanzen enthält, die weniger als 30%, insbesondere weniger als 15 %, gegebenenfalls weniger als 5% unterschiedlich sind.

3. Vorrichtung (1) nach Anspruch 1 oder 2, **dadurch gekennzeichnet, dass** für eine Gruppenbildung nur Distanzen miteinander verglichen werden, deren Empfänger eine bestimmte geometrische Anordnung zueinander haben.

4. Vorrichtung (1) nach einem der vorhergehenden Ansprüche, **dadurch gekennzeichnet, dass** die Anzahl der Gruppenmitglieder der ersten Gruppe (9, 10, 11) größer als 5, vorzugsweise größer als 10, gegebenenfalls größer als 20 sein muss, damit die Elektronikeinheit ein Signal durchgibt, das der Detektion von schwebeteilartigen Reflexionsobjekten zugeordnet ist.

5. Vorrichtung (1) nach einem der vorhergehenden Ansprüche, **dadurch gekennzeichnet, dass** die Elektronikeinheit ausgebildet ist, auch Distanzen, die kleiner sind als der Mittelwert von in etwa gleich großen Distanzen als Mitglieder der ersten Gruppe auszuwerten.

6. Vorrichtung (1) nach einem der vorhergehenden Ansprüche, **dadurch gekennzeichnet, dass** die Elektronikeinheit ausgelegt ist, in Abhängigkeit der gemessenen Distanzen die Anwesenheit und/oder Bewegung von Objekten zu detektieren, die deutlich größer sind als die schwebeteilartigen Reflexionsobjekte.

7. Vorrichtung (1) nach einem der vorhergehenden Ansprüche, **dadurch gekennzeichnet, dass** die Elektronikeinheit die Intensität des empfangenen Lichtes ermitteln kann.

8. Vorrichtung (1) nach einem der vorhergehenden Ansprüche, **dadurch gekennzeichnet, dass** die Elektronikeinheit dazu ausgelegt ist, ein angetriebenes Bewegungselement (2), zum Beispiel eine Türe, zu steuern.

9. Vorrichtung (1) nach einem der vorhergehenden Ansprüche, **dadurch gekennzeichnet, dass** die Elektronikeinheit so ausgelegt ist, dass, wenn schwebeteilartige Reflexionsobjekte detektiert wurden, die Elektronikeinheit das entsprechende Signal fortlaufend ausgibt, selbst wenn keine schwebteilartigen Reflexionsobjekte mehr detektiert werden.

10. Vorrichtung (1) nach einem der vorhergehenden Ansprüche, **dadurch gekennzeichnet, dass**, wenn die Elektronikeinheit aus den Distanzen neben der ersten Gruppe eine zweite Gruppe von vorgegebenen, z.B. in etwa gleich großen Distanzen ermittelt, die Distanzen der zweiten Gruppe entsprechend der ersten Gruppe behandelt werden, so wie wenn nur eine Gruppe vorliegt.

## Claims

1. Sensor device (1) consisting of a source for electromagnetic radiation, in particular light, a camera chip having multiple separately analyzable receivers for the electromagnetic radiation, and an electronic unit, wherein the electronic unit is designed to send out electromagnetic radiation by means of the source, and to determine a distance travelled by the electromagnetic radiation from a reflection surface of an object, sent out by the source, to the respective receiver, by means of analyzing a run time of the electromagnetic radiation, and/or a phase of an oscillation modulated onto the electromagnetic radiation, wherein the electronic unit is capable, for the detection of existing particulate-like reflection objects, to determine a first group (9, 10, 11) of distances matching a predetermined distribution, in particular distances of approximate equal size, from the distances measured from various receivers in different directions, and to output a signal in case of multiple group members, which is assigned to the detection of particulate-like reflection objects.

2. Device (1) according to claim 1, **characterized in that** the first group (9, 10, 11) contains distances that are less than 30%, in particular less than 15%, optionally less than 5% different.

3. Device (1) according to claims 1 or 2, **characterized in that** for the forming of groups, only those distances are compared to each other, the receivers of which have a certain geometric arrangement to each other.

4. Device (1) according to one of the previous claims, **characterized in that** the number of group members of the first group (9, 10, 11) must be greater than 5, preferably greater than 10, optionally greater than 20, in order for the electronic unit to pass through a signal that is assigned to the detection of particulate-like reflection objects.

5. Device (1) according to one of the previous claims, **characterized in that** the electronic unit is embodied to also analyze those distances that are smaller than the mean value of the distances of approximately the same size as the members of the first group.

6. Device (1) according to one of the previous claims, **characterized in that** the electronic unit is embodied to detect the presence and/or movement of objects as a function of the measured distances, which are significantly greater than the particulate-like reflection objects.

7. Device (1) according to one of the previous claims, **characterized in that** the electronic unit may determine the intensity of the light received.

8. Device (1) according to one of the previous claims, **characterized in that** the electronic unit is embodied to control a driven movement element (2), for example, a door.

9. Device (1) according to one of the previous claims, **characterized in that** the electronic unit is embodied such that if any particulate-like reflection objects have been detected, the electronic unit continuously puts out the respective signal, even if particulate-like reflection objects are no longer being detected.

10. Device (1) according to one of the previous claims, **characterized in that**, if in addition to the first group, the electronic unit determines a second group of distances being approximately of the same size from the distances, the distances of the second group are treated according to the first group, in such manner as if only one group was present.

## Revendications

1. Dispositif de détection (1) formé par une source de rayonnement électromagnétique, en particulier la lumière, une puce caméra avec plusieurs récepteurs, analysables séparément, pour le rayonnement électromagnétique, et une unité électronique, ladite unité électronique étant configurée pour émettre un rayonnement électromagnétique au moyen de la source et pour déterminer une distance que parcourt le rayonnement électromagnétique, émis par la source, depuis une surface réfléchissante d'un objet jusqu'au récepteur correspondants à l'appui d'une analyse du temps de propagation du rayonnement électromagnétique et/ou d'une phase d'une oscillation modulée sur le rayonnement électromagnétique, dans lequel dispositif ladite unité électronique pour la détection d'objets réflecteurs du type éléments en suspension, répartis spatialement dans un milieu, est apte, à partir des distances mesurées par différents récepteurs dans diverses directions, à déterminer un premier groupe (9, 10, 11) de distances qui s'ajustent dans une répartition donnée, en particulier des distances à peu près de même valeur et, en présence de plusieurs membres d'un groupe, à délivrer un signal qui est associé à la détection d'objets réflecteurs du type éléments en suspension.

2. Dispositif (1) selon la revendication 1, **caractérisé en ce que** le premier groupe (9, 10, 11) contient des distances dont moins de 30 %, en particulier moins de 15 %, le cas échéant moins de 5 %, sont différentes.

3. Dispositif (1) selon la revendication 1 ou 2, **caractérisé en ce que** pour la formation d'un groupe, on compare uniquement des distances dont les récepteurs sont agencés les uns par rapport aux autres selon un agencement géométrique déterminé.

4. Dispositif (1) selon l'une quelconque des revendications précédentes, **caractérisé en ce que** le nombre de membres du premier groupe (9, 10, 11) doit être supérieur à 5, de préférence supérieur à 10, le cas échéant supérieur à 20, afin que l'unité électronique délivre un signal qui est associé à la détection d'objets réflecteurs du type éléments en suspension.

5. Dispositif (1) selon l'une quelconque des revendications précédentes, **caractérisé en ce que** l'unité électronique est configurée pour analyser également des distances inférieures à la valeur moyenne de distances à peu près de même valeur formant les membres du premier groupe.

6. Dispositif (1) selon l'une quelconque des revendications précédentes, **caractérisé en ce que** l'unité électronique est configurée pour détecter, en fonction des distances mesurées, la présence et/ou le mouvement d'objets qui sont nettement plus grands que les objets réflecteurs du type éléments en suspension.

7. Dispositif (1) selon l'une quelconque des revendications précédentes, **caractérisé en ce que** l'unité électronique peut déterminer l'intensité de la lumière captée.

8. Dispositif (1) selon l'une quelconque des revendications précédentes, **caractérisé en ce que** l'unité électronique est configurée pour commander un élément mobile (2) actionné, tel qu'une porte.

9. Dispositif (1) selon l'une quelconque des revendications précédentes, **caractérisé en ce que** l'unité électronique est configurée de telle sorte que, lorsque des objets réflecteurs du type éléments en suspension ont été détectés, ladite unité électronique délivre en permanence le signal correspondant, même si plus aucun objet réflecteur du type élément en suspension n'est détecté.

10. Dispositif (1) selon l'une quelconque des revendications précédentes, **caractérisé en ce que**, lorsque l'unité électronique détermine à partir des distances, en plus du premier groupe, un deuxième groupe de distances prédéfinies, par exemple des distances à peu près de même valeur, les distances du deuxième groupe sont traitées conformément au premier groupe comme s'il n'existait qu'un seul groupe.
